# EUROPEAN PATENT APPLICATION

(11) **EP 2 053 286 A1**
(43) Date of publication of application: **29.04.2009**
(21) Application number: 07020938.2
(22) Date of filing: 25.10.2007
(51) Int. Cl.: F16J 15/08, F01D 11/00

(54) **Seal strip and turbine blade assembly**

(71) Applicant: SIEMENS AKTIENGESELLSCHAFT, 80333 München (DE)
(72) Inventor: Lake, Peter, DN21 1UA Gainsborough (GB); Webb, Rene James, NG24 2SX Newark, Notts (GB)

(57) **Abstract**

A seal strip (10), in particular for use in a gas turbine blade assembly, is disclosed which comprises a straight portion (15) and a portion (16) with a bending. The portion (16) with the bending is narrower regarding its width than the straight portion (15). Moreover, a turbine blade assembly, in particular for a gas turbine, is disclosed which comprises turbine blades (22), each turbine blade (22) having an airfoil (7), a blade root (11) and a platform (14) between the airfoil (7) and the blade root (11), and gaps between the platforms (14) of adjacent turbine blades (22). The turbine blade assembly further comprises inventive seal strips (10) which are arranged in the gap between the platforms (14) of two adjacent turbine blades (22). Furthermore, a gas turbine comprising an inventive turbine blade assembly is described.

## Description

The present invention relates to a seal strip, in particular for use in a gas turbine blade assembly. The invention further relates to a turbine blade assembly, in particular for a gas turbine.

The rotor of a turbine, especially of a gas turbine, can be built up from a number of discs. Each disc typically comprises a number of turbine blades which are attached to the periphery of the disc. A gas turbine blade usually comprises an airfoil, a blade root and a platform between the airfoil and the blade root.

To prevent the ingress of hot gases into a root cavity formed between neighbouring blade roots which can cause undesired heating of the disc rim, blade cooling air supply and seal strips are located between adjacent turbine blades. These seal strips are usually simple single plane elements which are retained via a notch in each of the adjacent turbine blades.

A seal slot misalignment from blade to blade may cause a subsequent locking of platforms due to the tilting of seal strips. Especially if the seal strip has a bent shape, any seal slot misalignment may magnify the tilt of the strip and may hence potentially cause platform locking.

It is therefore an objective of the present invention to provide an improved seal strip, in particular for use in a gas turbine blade assembly. Another objective is to provide an advantageous turbine blade assembly, in particular for a gas turbine. A third objective is to provide a gas turbine with an improved turbine blade assembly.

These objectives are solved by a seal strip as claimed in claim 1, by a turbine blade assembly as claimed in claim 9 and by a gas turbine as claimed in claim 11. The depending claims define further developments of the invention.

The inventive seal strip, in particular for use in a gas turbine blade assembly, comprises a straight portion and a portion with a bending. The portion with a bending is narrower regarding its width than the straight portion. The narrower width of the portion with a bending allows for seal slot misalignment and potential seal strip articulation. Moreover, this seal strip design enables the use of existing methods of blade locking, especially the use of locking plates at the rear of the disc. Generally, the inventive seal strip reduces loading on the blade and prevents platform locking, whilst the seal strip effectively prevents ingress of hot gasses into the root cavities. The full platform can be sealed by the straight portion of the inventive seal strip.

Advantageously, a transition portion may be located between the straight portion and the portion with a bending. This transition portion has the width of the straight portion where it is connected to the straight portion. The transition portion has the width of the portion with a bending where it is connected to the portion with a bending. The width of the transition portion gradually changes from the straight portion's width to the width of the portion with a bending.

The portion with a bending of the seal strip may be bent twice. Preferably, the portion with the bending is bent into an S-shape. The portion with a bending may comprise at least one bent portion and at least one straight portion and the angle between the straight portion and a straight portion of the portion with a bending and/or between two straight portions of the portion with a bending may have a value between 60° and 90°. Moreover, the radius of curvature of a bent portion of the portion with a bending may have a value between 5mm and 10cm, preferably between 2cm and 5cm. Furthermore, the seal strip may comprise skewed rectangular portions.

The inventive turbine blade assembly, in particular for a gas turbine, comprises turbine blades. Each turbine blade has an airfoil, a blade root and a platform between the airfoil and the blade root. The inventive turbine blade assembly further comprises gaps between the platforms of adjacent turbine blades and root cavities which are formed between the blade roots of adjacent turbine blades. Moreover, the inventive turbine blade assembly comprises seal strips. The seal strips are arranged in the gaps between the platforms of adjacent turbine blades and may, in particular, cover the whole length of the root cavity. The used seal strip has the properties of any of the previously described inventive seal strips. The inventive turbine blade assembly has the same advantages as the inventive seal strip. This means that it reduces loading on the blade, prevents platform locking, provides a sealing of the full platform and prevents ingress of hot gases into the root cavity.

The inventive gas turbine comprises a turbine blade assembly, as previously described.

Further features, properties and advantages of the present invention will become clear from the following description of an embodiment in conjunction with the accompanying drawings.

Fig. 1 schematically shows a turbine disc in a front view.

Fig. 2 schematically shows a turbine disc in a sectional view.

Fig. 3 schematically shows an enlarged portion of the turbine disc which is shown in Figure 2.

Fig. 4 schematically shows an inventive seal strip in a front view.

Fig. 5 schematically shows an inventive seal strip in a sectional view along its length.

Fig. 6 schematically shows a seal strip in a sectional view along the direction IV-IV in Figure 4.

Fig. 7 shows an enlarged portion of a turbine blade with a locking plate and a seal strip in a sectional view.

Fig. 8 schematically shows a portion of the inventive turbine blade assembly with a seal strip in a perspective view.

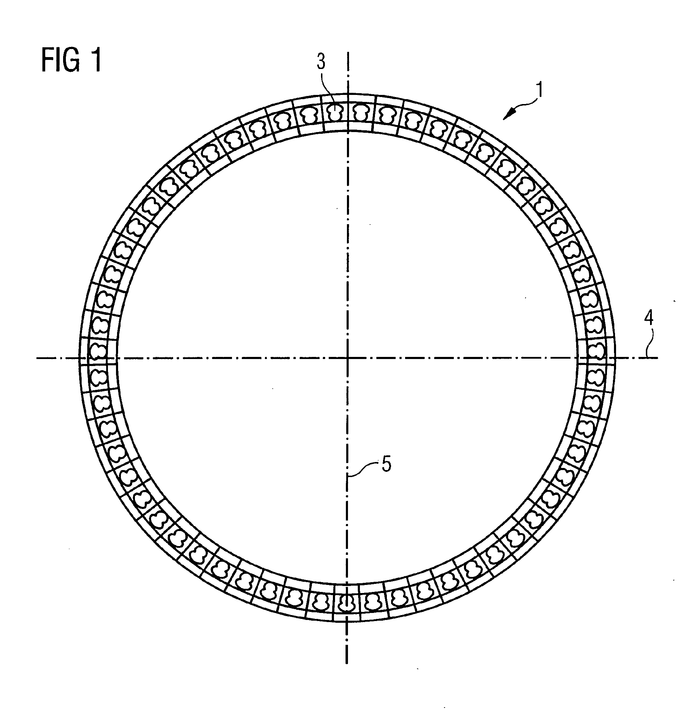

Figure 1 schematically shows a turbine disc 1 as it is usually used in a gas turbine. The disc comprises axial grooves 3 at its periphery into which roots of turbine blades can be inserted for mounting turbine blades to the disc. Two radial symmetry axes of the turbine disc 1 are indicated by reference numerals 4 and 5.

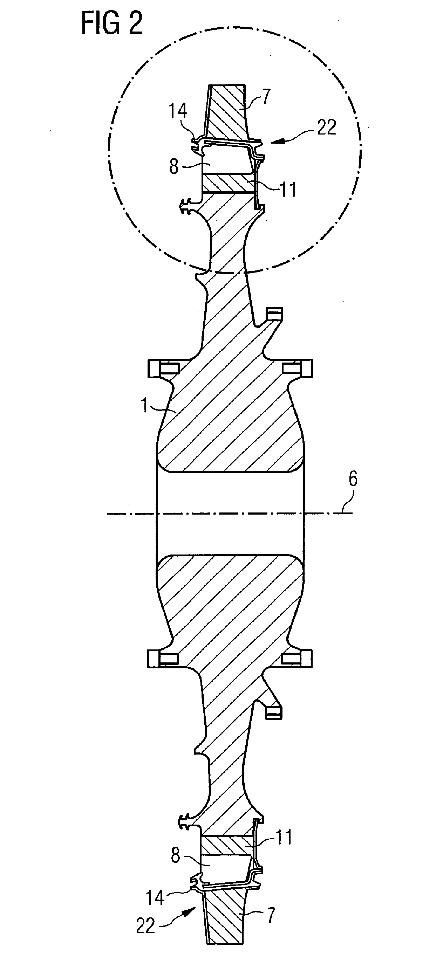

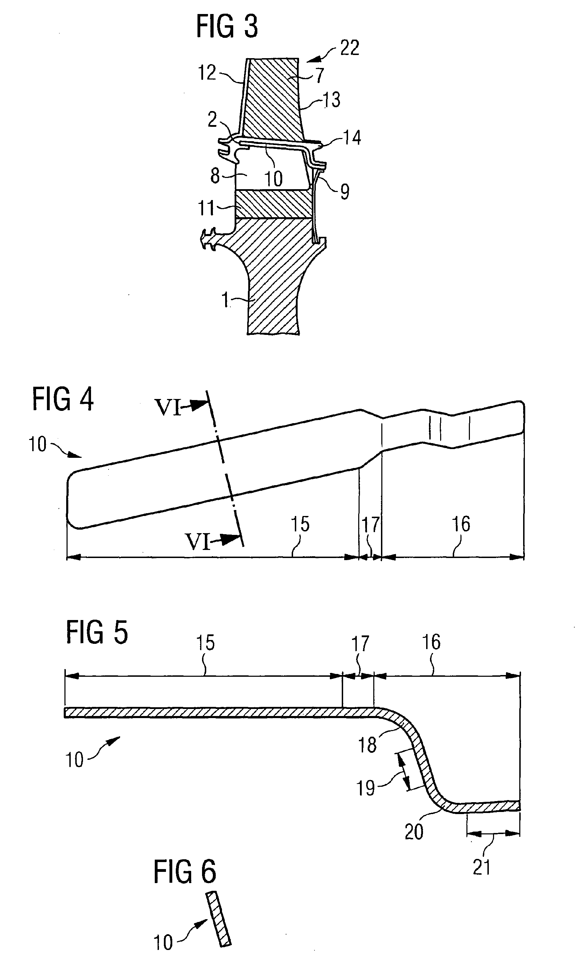

Figure 2 schematically shows a turbine disc 1 in a sectional view along one of the symmetry axes 4 or 5. Figure 3 shows the upper part of Figure 2, which is indicated by a circle, in an enlarged sectional view. A portion of the turbine disc 1 with a turbine blade 22 comprising an airfoil 7, a platform 14, a blade root 11 and the root cavity 8 is shown. Furthermore, Figure 3 shows a locking plate 9 which secures the turbine blade against slipping out of the groove of the turbine disc 1.

The turbine disc 1 is equipped with turbine blades 22. Each turbine blade 22 comprises an airfoil 7, a blade root and a platform 14. The platform 14 is located between the airfoil 7 and the blade root 11. By the blade root 11, which is connected to the platform 14, the turbine blade 22 is mounted to the turbine disc 1. For the purpose of mounting a portion of the blade root 11 is inserted into the axial grooves 3 of the turbine disc 1. The blade roots 11, which are placed rather loosely in the grooves 3, are secured to the turbine disc 1 by means of locking plates 9 which are situated at axial ends, in the present embodiment, at the downstream ends of the turbine blades 22 (see Figure 3).

Root cavities 8 are formed between such root portions of neighbouring turbine blades 22 which are located adjacent to the respective platforms 14. In Figure 2 two turbine blades 22 are shown which are mounted to opposite sections of the turbine disc 1. The rotation axis of the turbine disc 1 in Figure 2 is indicated by reference numeral 6.

The airfoil 7, which comprises an upstream edge 12 and a downstream edge 13, is connected to the platform 14. The platform comprises a notch 2 into which a seal strip 10 can be inserted. The seal strip 10, when inserted into the notches 2 of neighbouring platforms 14, covers the whole length of the root cavity 8 which is formed under the platforms 14.

Figure 4 shows a seal strip 10 in a front view. The seal strip 10 comprises several stretched rectangular shaped portions which are skewed in line with the blade roots 11. The seal strip 10 has rounded corners for better insertion into the notches 2 in the platforms 14.

The seal strip 10 comprises a straight portion 15, a bent portion 16 and a transition portion 17. The transition portion 17 is located between the straight portion 15 and the bent portion 16 which is used to secure the seal strip 10 against falling into the root cavity 8. Generally the width of the bent portion 16 is narrower than the width of the straight portion 15. The straight portion 15 is broader than the rest of the seal strip 10 since it is to provide the main sealing function of the strip 10 and must therefore cover the gap between neighbouring platforms 14 of turbine blades.

The transition portion 17 has the width of the straight portion 15 at the side where the straight portion 15 is facing the transition portion 17. The opposite side of the transition portion 17 which is facing the bent portion 16 has the width of the bent portion 16. From the straight portion 15 to the bent portion 16 the transition portion 17 gradually becomes narrower. Moreover, the bent portion 16 comprises several stretched rectangular shaped portions which are skewed in line with the platform's underside.

Figure 5 shows the seal strip 10 in a sectional view along its length. One can see that the straight portion 15 and the transition portion 17 are straight along their length. The bent portion 16 comprises a first bent portion 18 which is connected to the transition portion 17, followed by a first short straight portion 19, a second bent portion 20 and a second straight portion 21.

The angle between the straight portion 15 and the first straight portion 19 of the bent portion 16 and the angle between the first straight portion 19 and the second straight portion 21 of the bent portion 16 are in the range between 60° and 90°. The radius of curvature of the first bent portion 18 and/or the second bent portion 20 may have a value between 1cm and 10 cm, preferably between 2cm and 5cm. One can see in Figure 5 that the described geometry gives the seal strip 10 an S-shape.

In Figure 6 the seal strip 10 is shown in a sectional view along the direction VI-VI, as it is indicated in Figure 4. One can see in Figure 6 that the seal strip's 10 cross section has a stretched rectangular shape with rounded corners.

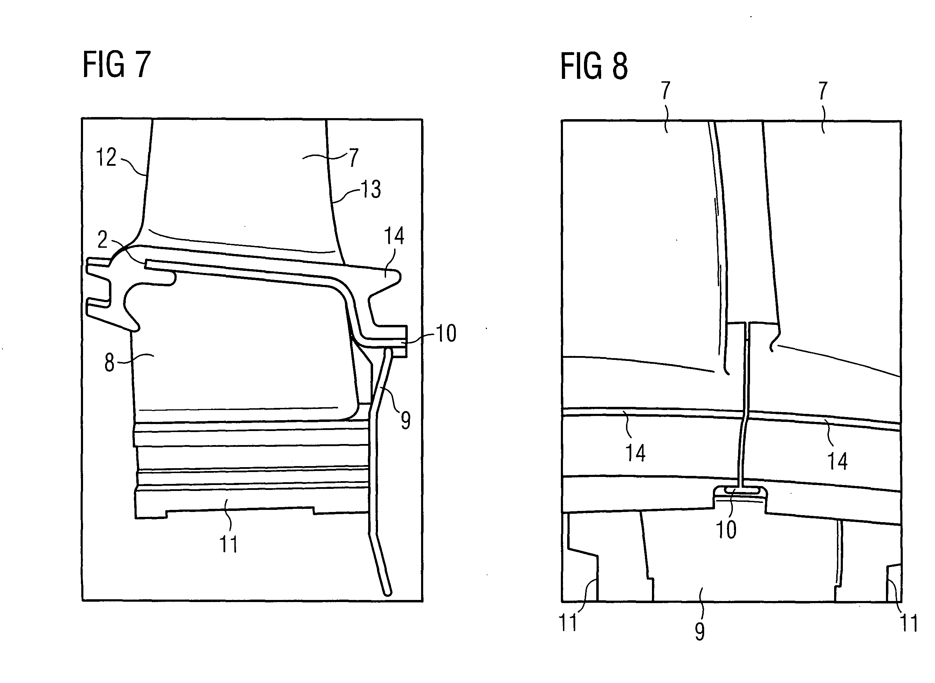

Figure 7 shows a portion of a turbine blade with a seal strip 10 and a locking plate 9 in a sectional view. The seal strip 10 is placed into the notch 2 of neighbouring platforms 14 (only one of which is visible in Figure 7) and is fixed by means of the locking plate 9. The locking plate 9 is located at the downstream end of the turbine plate and secures the blade root 11 in the axial direction of the groove 3 of the turbine disc 1.

The seal strip 10 has an S-shape, as has already been described in conjunction with Figure 5. The second straight portion 21 of the bent portion 16 of the seal strip 10 is located at the downstream end of the root 11, i.e. where the locking plate 9 is also placed. Moreover, this straight portion 21 protrudes over the blade root 11 and also over the locking plate 9. The locking plate 9 attaches the seal strip 10 at its underside and thus prevents the seal strip 10 from a radial movement. In contrast, a movement or thermal expansion in axial direction of the disc remains possible.

Figure 8 shows a portion of two turbine blades 22 which are located adjacent to each other on a disc 1 in a perspective view. The two airfoils 7, the two adjacent platforms 14 and the two blade roots 11 of the turbine blades 22 are shown. Between the adjacent platforms 14 a seal strip 10 is situated which is radially fixed by means of a locking plate 9. It is shown in Figures 7 and 8 that the straight portion 15 of the seal strip 10 covers the root cavity 8 which is formed between the roots 11 of the adjacent turbine blades 22. Moreover, the seal strip 10 is only radially fixed while an extension in axial direction, for instance caused by thermal expansion, remains possible. This makes the inventive turbine blade assembly less prone to manufacturing variants and prevents the seal strip 10 from falling out, for example into the root cavity 8.

In summary, the inventive seal strip allows for an easy insertion of the seal strip into the slots of the platforms of adjacent turbine blades. It further reduces loads acting on the blade and prevents possible platform locking.

Moreover, the invention offers a full platform seal which prevents ingress of hot gases into the root cavities.

## Claims

1. A seal strip (10), in particular for use in a gas turbine blade assembly, comprising a straight portion (15) and a portion (16) with a bending,
wherein the portion (16) with a bending is narrower regarding its width than the straight portion (15).

2. The seal strip (10), as claimed in claim 1,
wherein a transition portion (17) is located between the straight portion (15) and the portion (16) with a bending, the transition portion (17) having the width of the straight portion (15) where it is connected to the straight portion (15) and having the width of the portion (16) with a bending where it is connected to the portion (16) with a bending with its width gradually changing from the width of the straight portion (15) to the width of the portion (16) with a bending.

3. The seal strip (10), as claimed in claim 1 or 2,
wherein the portion (16) with a bending is bent twice.

4. The seal strip (10), as claimed in any of the claims 1 to 3,
wherein the portion (16) with a bending is bent into an S-shape.

5. The seal strip (10), as claimed in any of the claims 1 to 4,
wherein the portion (16) with a bending comprises at least one bent portion (18, 20) and at least one straight portion (19, 20) and
wherein the angle between the straight portion (15) and a straight portion (19, 20) of the portion (16) with a bending and/or between two straight portions (19, 20) of the portion (16) with a bending has a value between 60° and 90°.

6. The seal strip (10), as claimed in any of the claims 1 to 5,
wherein the radius of curvature of a bent portion (18, 20) of the portion (16) with a bending has a value between 5mm and 10cm.

7. The seal strip (10), as claimed in claim 6,
wherein the radius of curvature of the bent portion (18, 20) has a value between 2cm and 5cm.

8. The seal strip (10), as claimed in any of the claims 1 to 7,
wherein the seal strip (10) comprises skewed rectangular portions.

9. A turbine blade assembly, in particular for a gas turbine, comprising turbine blades (22), each turbine blade (22) having an airfoil (7), a blade root (11) and a platform (14) between the airfoil (7) and the blade root (11), and gaps between the platforms (14) of adjacent turbine blades (22),
wherein the turbine blade assembly further comprises seal strips (10), as claimed in any of the claims 1 to 5, which are arranged in the gap between the platforms (14) of two adjacent turbine blades (22).

10. The turbine blade assembly, as claimed in claim 9,
wherein root cavities (8) are formed between the blade roots (11) of adjacent turbine blades (22) and the seal strips (10) cover the whole length of the root cavities (8).

11. A gas turbine comprising a turbine blade assembly, as claimed in claim 9 or 10.
